# DEMANDE DE BREVET EUROPEEN

(11) **EP 0 935 365 A1**
(43) Date de publication de la demande: **11.08.1999**
(21) Numéro de dépôt: 99400161.8
(22) Date de dépôt: 25.01.1999
(51) Int. Cl.: H04L 12/24

(54) **Procédé de sécurisation du protocole CMIP**

(30) Priorité: 05.02.1998 FR 9801337
(71) Demandeur: ALCATEL, 75008 Paris (FR)
(72) Inventeur: Gonthier, Patrice, 78140 VELIZY VILLACOUBLAY (FR)
(74) Mandataire: Lamoureux, Bernard

(57) **Abrégé**

Procédé de securisation d'une communication entre un élément logiciel initiateur et un élément logiciel cible, la communication se composant d'une première étape dite d'association correspondant à l'émission du CMIS A-ASSOCIATE, et une seconde étape, dite d'exploitation, correspondant à une succession d'émissions de CMIS, caractérisé en ce que :
- le champ ACCESS CONTROL dudit élément de service A-ASSOCIATE contient un certificat de contrôle d'accès et une information de chiffrement,
- en ce que, pendant ladite étape d'exploitation un moyen d'authentification est inclu dans le champ « EVENT INFORMATION » pour l'élément de service M-EVENT-REPORT, « USER INFORMATION » pour les éléments de service A-RELEASE et A-ABORT, et « ACCESS CONTROL » pour les autres éléments de service,
- et en ce que l'élément de service M-CANCEL-GET est interdit.

## Description

Le domaine de la présente invention est celui de la gestion de réseaux, et notamment des réseaux de gestion des télécommunications (RGT, ou TMN pour *Telecommunication Management Network* en anglais). Elle concerne plus particulièrement un procédé de sécurisation d'une communication entre deux éléments logiciels, conforme à un protocole de gestion de réseaux de type CMIP *(Common Management Information Protocol* en anglais).

Il existe plusieurs protocoles de gestion de réseaux, dont deux principaux: SNMP et CMIP. SNMP (*Simple Network Management Protocol*) est historiquement le premier à avoir vu le jour, et gère, principalement, des réseaux basés sur une architecture TCP/IP (*Transport Control Protocol / Internet Protocol*). Son but n'était à l'époque que de proposer une solution provisoire avant la conception d'un protocole plus complet, CMIP, se basant principalement sur le modèle en couches OSI (*Open System Interconnection*) de l'ISO (*International Standard Organisation*).

Les nombreux avantages du protocole CMIP par rapport au protocole SNMP ont comme contrepartie une complexité et une lourdeur de mise en oeuvre qui font que seuls certains types de réseaux peuvent le supporter, et c'est notamment le cas des réseaux de gestion des télécommunications (RGT).

En ce référant au modèle en couches OSI, le protocole CMIP doit être vu comme un protocole de la couche 7, c'est-à-dire de la couche appelée application. Il est défini par les recommandations X.710 à X.712 émises par l'ITU-T *(International Telecommunication Union - Telecommunication standard support,* c'est-à-dire l'ancien CCITT, Comité Consultatif International de Télégraphie et de Téléphonie).

Le but d'un protocole de gestion de réseaux tel CMIP est de transmettre des éléments de service entre deux éléments logiciels, par des messages appelés PDU (pour *Protocol Data Unit* en anglais). Habituellement, l'émetteur du PDU est appelé initiateur, et le récepteur est nommé cible. D'une façon générale, ces éléments de services sont appelés CMIS pour *Common Management Information Service.*

Il existe plusieurs catégories d'éléments de service CMIS. Parmi ces catégories, on peut citer :
- les éléments de service ACSE (pour *Application Control Service Element* en anglais), et
- les éléments de service CMISE (pour *Common Management Information Service Element,* en anglais).

Le but des éléments de service de la catégorie ACSE est de gérer les associations entre des éléments logiciels. On peut notamment citer l'élément de service A-ASSOCIATE qui permet de créer une association entre l'élément logiciel cible et l'élément logiciel initiateur. L'élément de service A-RELEASE permet au contraire de rompre l'association entre les éléments logiciels cible et initiateur. Il existe un troisième élément de service, A-ABORT qui permet d'interrompre une association en cas d'incident.

Le but des éléments de service de la catégorie CMISE est de gérer les échanges d'information entre l'élément logiciel cible et l'élément logiciel initiateur. Les différents éléments de service CMISE sont les suivants : M-EVENT-REPORT, M-GET, M-CANCEL-GET, M-SET, M-ACTION, M-CREATE et M-DELETE.

On peut décomposer une communication entre un élément logiciel initiateur et un élément logiciel cible en deux étapes : une étape d'association durant laquelle l'initiateur transmet à la cible un PDU contenant l'élément de service A-ASSOCIATE, et une étape d'exploitation durant laquelle l'initiateur exploite l'association ainsi créée en échangeant des informations avec la cible.

Afin d'obtenir davantage de renseignements sur les différents éléments de service CMISE, le lecteur peut se rapporter à la recommandation X.710 de l'ITU-T (pour *International Telecommunication Union - Telecommunication standardization section,* en anglais), intitulée *« Common Management Information Service de finition for CCITT Applications ».*

En ce qui concerne, les éléments de service ACSE, le lecteur peut se rapporter à la recommandation X.217 de l'ITU-R, intitulée *« Association Control Service de finition for CCITT applications ».*

Que ce soit dans le cadre des réseaux de gestion des télécommunications (RGT), ou dans un cadre plus général des réseaux de traitement de l'information de grande taille, il peut exister un besoin de sécurisation des communications entre les différents éléments logiciels distribués sur un réseau vis-à-vis des différentes menaces.

Par exemple, dans le cadre des réseaux de gestion des télécommunication (RGT), il existe des éléments logiciels, appelés classiquement objets gérés (MO pour *Managed Object* en anglais) Chacun de ces objets gérés a pour but de gérer un équipement d'un réseau de télécommunication. Aussi, lorsqu'un objet géré reçoit un message lui demandant d'éteindre l'équipement dont il a la charge, il est important que cet objet géré soit assuré de la validité d'une telle requête, c'est-à-dire que l'objet géré doit être assuré que l'objet qui a émis une telle requête a effectivement le droit de le faire.

La sécurisation des communications entre éléments logiciels, notamment objets gérés, au sein d'un environnement distribué, notamment un réseau de gestion des télécommunications (RGT), passe par la sécurisation du protocole de communication utilisé.

Pour cela, chaque élément de service comporte un certificat de contrôle d'accès, et est sécurisé. Ce certificat peut comporter des informations sur les droits en accès dont dispose l'élément initiateur vis-à-vis de l'élément cible (droit de consultation des données de l'élément cible, droit de modification, etc.).

Ce certificat d'accès peut, par exemple, être conforme à la norme ISO/IEC DIS 10181-3 « *Information Technology - Security Frameworks in Open Systems - Part 3 : Access Control* », bien que de nombreuses autres mises en oeuvre sont bien évidemment possibles. Dans le cadre de cette norme, le certificat de contrôle d'accès (appelé ACC pour *Access Control Certificate,* en anglais), contient l'ensemble des droits affectés à l'élément initiateur A, ce qui en pratique peut faire plusieurs kilo-octets.

On comprend que le fait d'alourdir chaque élément de service d'un certificat de contrôle d'accès de plusieurs kilo-octets, représente un désavantage certain en pénalisant les communications entre les différents éléments logiciels du système.

De plus, la prise en compte de ce certificat de contrôle d'accès par les éléments logiciels engendre une augmentation significative du temps de traitement des messages par ces éléments logiciels.

Le but de la présente invention est donc de proposer un procédé de sécurisation d'une communication conforme à un protocole de type CMIP, entre deux éléments logiciels au sein d'un environnement logiciel distribué, qui ne présente pas les inconvénients du procédé précedemment évoqué.

À cet effet, l'invention a pour objet un procédé de securisation d'une communication, au sein d'un environnement informatique distribué, entre un élément logiciel appelé initiateur et un autre élément logiciel appelé cible, ladite communication se composant d'une première étape dite d'association correspondant à l'émission de l'élément de service A-ASSOCIATE au sens de la recommandation X.217 de l'ITU-T, et une seconde étape, dite d'exploitation, correspondant à une succession d'émission d'éléments de service au sens des recommandation X.710 ou X.217 de l'ITU-T.

Ce procédé se caractérise en ce que :
- le champ ACCESS CONTROL de l'élément de service A-ASSOCIATE contient un certificat de contrôle d'accès et une information de chiffrement,
- en ce que, pendant l'étape d'exploitation, un moyen d'authentification est inclu dans le champ « EVENT INFORMATION » pour l'élément de service M-EVENT-REPORT, « USER INFORMATION » pour les éléments de service A-RELEASE et A-ABORT, et « ACCESS CONTROL » pour les autres éléments de service,
- et en ce que l'élément de service M-CANCEL-GET est interdit.

L'invention et ses avantages apparaîtront de façon plus claire dans la description qui va suivre en relation avec la figure unique jointe qui illustre une mise en oeuvre particulière de l'invention, comportant un serveur d'accès.

Dans cette mise en oeuvre, l'élement logiciel initiateur A demande dans un premier temps (référence 1 de la figure unique) un certificat de contrôle d'accès à un serveur d'accès S. Dans un second temps (2), le serveur d'accès S émet le certificat de contrôle d'accès à destination de l'élément initiateur A.

Comme dit précédemment, ce certificat de contrôle d'accès peut, par exemple, être conforme à la norme ISO/IEC DIS 10181-3 « *Information Technology - Security Frameworks in Open Systems - Part 3 : Access Control ».*

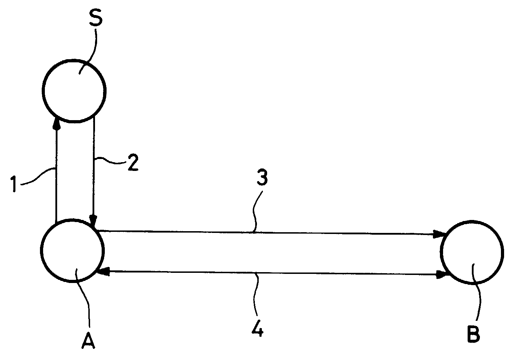

Dans un troisième temps, l'élement inititateur A crée alors un PDU qui est transmis vers l'élément cible B (référence 3 sur la figure 1). Ce premier PDU véhicule un élément de service de type A-ASSOCIATE, créant une association entre l'élément initiateur A et l'élément cible B. Il peut contenir trois types de données:
- des données propres à la création de l'association (c'est-à-dire des paramètres de l'élément de service A-ASSOCIATE tels que définis dans le document X.217 mentionné ci-dessus),
- le certificat de contrôle d'accès (pouvant être conforme à la norme ISO/IEC DIS 101181-3, ainsi qu'il est précisé ci-dessus) protégé en intégrité, et
- une information de chiffrement, protégée en intégrité et confidentialité.

Cette information de chiffrement sera utilisée ultérieurement pendant la phase d'exploitation pour permettre aux deux éléments logiciels de sceller ou signer des messages, voire de les chiffrer si nécessaire.

Des exemples de telles informations de chiffrement sont la clé publique certifiée de l'élément initiateur, ou encore une clé secrète de session protégée en confidentialité et en intégrité.

L'information de chiffrement ainsi que le certificat de contrôle d'accès sont contenus dans le champ ACCESS CONTROL de l'élément de service A-ASSOCIATE, qui peut par ailleurs comporter d'autres informations propres à cet élément de service.

La référence 4 de la figure unique représente la phase dite d'exploitation du procédé selon l'invention.

Pendant cette phase, seules sont transmises :
- les données propres aux éléments de service véhiculés.
- Une signature ou un sceau, correspondant à l'information de chiffrement transmis lors de l'étape précédente (c'est-à-dire lors de la phase d'association).

II est à noter que ces PDU peuvent transiter soit de l'élément initiateur vers l'élément cible, soit de l'élément cible vers l'élément initiateur.

Il est aussi à noter qu'en plus des informations propres à l'élément de service véhiculé par le PDU, seule la signature ou le sceau est transmis pendant la phase d'exploitation. Cette information étant beaucoup moins volumineuse que le certificat de contrôle d'accès,on comprend donc que le gain en terme de taille des PDU est extrêmement important, ce qui se répercute sur les performances globales du système.

On comprend aussi que l'élément cible ayant reçu le certificat de contrôle d'accès lors de la phase d'association, est en possession de ces informations et n'a donc plus besoin de les recevoir. Le besoin est uniquement une authentification de l'origine des messages, c'est-à-dire que l'élément logiciel cible doit pouvoir être sûr que l'émetteur du PDU est bien l'élément initiateur de l'association.

Ce but est atteint par la signature ou le sceau, basé sur l'information de chiffrement qui est transmise pour chaque PDU pendant la phase d'exploitation.

Cette signature ou ce sceau est inséré dans un des champs libres des PDU, tels que définis par les recommandations ITU-T.

Ainsi, pour les éléments de service, A-RELEASE et A-ABORT, le champ « USER INFORMATION » est utilisé. Pour les éléments de service, M-GET, M-SET, M-ACTION, M-CREATE et M-DELETE, le champ « ACCESS CONTROL » est utilisé. Pour l'élément de service, M-EVENT-REPORT, le champ « EVENT INFORMATION » est utilisé.

L'élément de service M-CANCEL-GET ne possède pas de champ susceptible d'être utilisé pour véhiculer un moyen d'authentification de type signature ou sceau.

Aussi, selon une mise en oeuvre particulière, une action peut être créée au niveau de l'élément logiciel cible, dont la fonction est la même que celle de M-CANCEL-GET.

Ainsi, l'utilisation de l'élément de service M-CANCEL-GET peut être interdite et remplacée par l'utilisation d'un élément de service M-ACTION comportant comme paramètres :
- ceux qui auraient été véhiculés par M-CANCEL-GET, et l'information de chiffrement
- une information indiquant que l'action à effectuer correspond à M-CANCEL-GET,
- et une information de chiffrement.

Les techniques permettant le codage, le chiffrement ou le cryptage des informations contenues dans les PDU sont des techniques classiques connues de l'homme du métier. Pour davantage de précisions, celui-ci peut consulter les nombreux ouvrages concernant le domaine, par exemple, « *Data & computer security : dictionnary of standards concepts and terms »* de Dennis Longley & Michael Shain.

En fonction de la technique utilisée, on peut déduire plusieurs mises en oeuvre particulière de l'invention. Deux exemples particuliers vont être maintenant décrits.

Dans le cas d'une technique de type asymétrique, les différents éléments logiciels impliqués (A, B et S) possèdent des clés publiques et des clés privées. Conformément au vocabulaire usuel, la clé publique d'un élément est connue de tout le système, tandis que la clé privée d'un élément n'est connu que de celui-ci.

Conformément au procédé général précédemment décrit, l'élément logiciel initiateur A demande dans un premier temps un certificat de contrôle d'accès à un serveur de droit d'accès S.

Dans un second temps (2), le serveur S envoie à l'initiateur A, un certificat de contrôle d'accès signé avec sa clé privée.

Ensuite, l'initiateur A fabrique un jeton contenant :
- le certificat de contrôle d'accès foumit par le serveur S,
- l'information de chiffrement qui sera utilisée pour les étapes suivantes, c'est-à-dire, dans cette mise en oeuvre, la clé publique de A.
   Cette information de chiffrement est chiffrée avec la clé publique de B, ce qui assure que seul, le détenteur de la clé privée de B pourra déchiffrer cette information.
- la signature de la requête (champ «ACCESS CONTROL » non compris), signée avec la clé privée de A, afin de protéger l'ensemble de l'information comprise dans l'élément de service.
   Ce jeton est lui même signé avec la clé privée de A.

Enfin, l'initiateur insert ce jeton dans le champ « ACCESS CONTROL » de l'élement de service A-ASSOCIATE, et crée le PDU qui est transmis vers l'élément cible (référence 3 de la figure unique).

L'élément cible B reçoit la demande d'association et extrait l'élément contenu dans le champ ACCESS CONTROL de l'élément de service A-ASSOCIATE, puis effectue les contrôles suivants :
- déchiffrement de l'information de chiffrement qui sera utilisé pour les échanges suivants, en utilisant la clé privée de B.
- vérification de la signature de la requête (hors champ ACCESS CONTROL), avec la clé publique de A, ce qui garantit l'intégrité de la requête (hors champ ACCESS CONTROL) et son origine.
- vérification de la signature de l'élément extrait du champ access-control, avec la clé publique de A, ce qui garantit l'intégrité du contenu du champ ACCESS CONTROL et son origine,
- extraction du certificat de contrôle d'accès et vérification de sa signature avec la clé publique de S (ce qui garantit son authenticité et son origine),

À partir de ce moment, l'initiateur A et la cible B partagent tous les deux la même information de chiffrement (ici la clé publique de A) qui sera utilisée pour sécuriser les échanges suivants.

Dans le cas d'une technique de type symétrique, le serveur d'accès S a aussi un rôle de serveur de clé. Il possède une clé privée connue de lui seul, ainsi qu'une clé publique, connue du système, et donc, notamment des éléments logiciels A et B.

Par ailleurs, A et S d'une part, et B et S d'autre part partagent une clé secrète.

Comme précédemment, l'élément logiciel initiateur A demande dans un premier temps un certificat de contrôle d'accès à un serveur de droit d'accès S.

Dans un second temps (2), le serveur S envoie à l'initiateur A, un certificat de contrôle d'accès, signé avec sa clé privée, ainsi qu'une clé de session.

Ensuite, l'initiateur A fabrique un jeton contenant :
- le certificat de contrôle d'accès fourni par le serveur S,
- l'information de chiffrement. Dans cet exemple, il s'agit d'une clé secrète (symétrique) qui ne sera utilisée que durant l'association.
   Elle est chiffrée avec la clé partagée entre le serveur de clés et B, ce qui garantit que seul l'élément cible B pourra la lire.
- le scellement de la requête (champ ACCESS CONTROL non compris), avec la clé de session que se partagent les éléments A et B, afin de protéger l'ensemble de l'information comprise dans la requête.

Ce jeton est lui même scellé avec la clé de session que se partagent les éléments A et B.

Enfin l'initiateur insert ce jeton dans le champ ACCESS CONTROL de l'élément de service A-ASSOCIATE, et crée le PDU qui est transmis vers l'élément cible B.

L'élément cible B reçoit la demande d'association et extrait l'élément contenu dans le champs ACCESS CONTROL de l'élément de service A-ASSOCIATE, puis effectue les contrôles suivants :
- extraction et déchiffrement de l'information de chiffrement qui sera utilisé pour les échanges suivants, en utilisant la clé secrète que se partagent B et le serveur de clé S,
- vérification du scellement de l'élément de service (hors champ ACCESS CONTROL), avec la clé secrète de session, ce qui garantit l'intégrité de cet élément de service (hors champ ACCESS CONTROL) et son origine.
- vérification du scellement de l'élément extrait du champ ACCESS CONTROL, avec la clé secrète de session, ce qui garantit l'intégrité du contenu du champ ACCESS CONTROL et son origine,
- extraction du certificat de contrôle d'accès et vérification de sa signature avec la clé publique de S (ce qui garantit son authenticité et son origine).

Dorénavant, l'initiateur A et la cible B partagent tous les deux la même information de chiffrement (la clé de session), qui sera utilisée pour sécuriser les échanges suivants (c'est-à-dire pendant la phase d'exploitation).

## Revendications

1. Procédé de securisation d'une communication, au sein d'un environnement informatique distribué, entre un élément logiciel appelé initiateur et un autre élément logiciel appelé cible, ladite communication se composant d'une première étape dite d'association correspondant à l'émission de l'élément de service A-ASSOCIATE au sens de la recommandation X.217 de l'ITU-T, et une seconde étape, dite d'exploitation, correspondant à une succession d'émission d'éléments de service au sens des recommandation X.710 ou X.217 de l'ITU-T, caractérisé en ce que
• le champ ACCESS CONTROL dudit élément de service A-ASSOCIATE contient un certificat de contrôle d'accès et une information de chiffrement,
• en ce que, pendant ladite étape d'exploitation un moyen d'authentification est inclu dans le champ « EVENT INFORMATION » pour l'élément de service M-EVENT-REPORT, « USER INFORMATION » pour les éléments de service A-RELEASE et A-ABORT, et «ACCESS CONTROL» pour les autres éléments de service,
• et en ce que l'élément de service M-CANCEL-GET est interdit.

2. Procédé selon la revendication précédent, caractérisé en ce que ledit moyen de sécurisation est constitué d'une signature ou d'un sceau d'une partie du contenu desdits éléments de service, par ladite information de chiffrement.

3. Procédé selon l'une des revendications précédentes, caractérisé en ce que lesdites données d'accès sont fournies par un serveur d'accès.

4. Procédé selon la revendication précédente, caractérisé en ce que ledit serveur d'accès est conforme à la norme ISO/IEC DIS 10181-3.

5. Procédé selon l'une des revendications précédentes, caractérisé en ce que l'élement logiciel cible comporte une action ayant la même fonction que l'élément de service M-CANCEL-GET.
